# EUROPÄISCHE PATENTSCHRIFT

(11) **EP 2 756 970 B1**
(45) Veröffentlichungstag und Bekanntmachung des Hinweises auf die Patenterteilung: **27.03.2019**
(21) Anmeldenummer: 14150204.7
(22) Anmeldetag: 06.01.2014
(51) Int. Cl.: B60G 7/00, B60G 3/28, B60G 11/02, F16F 1/368

(54) **LENKER ZUR ÜBERTRAGUNG VON KRÄFTEN UND LENKEREINRICHTUNG**
ROD FOR THE TRANSMISSION OF FORCES AND GUIDING DEVICE
BIELLE DE TRANSMISSION DE FORCES ET DISPOSITIF DE GUIDAGE

(30) Priorität: 17.01.2013 DE 102013100486
(43) Veröffentlichungstag der Anmeldung: 23.07.2014
(73) Patentinhaber: Technische Universität Darmstadt, 64289 Darmstadt (DE)
(72) Erfinder: Schürmann, Helmut, 67133 Maxdorf (DE)
(74) Vertreter: Katscher Habermann Patentanwälte

(56) Entgegenhaltungen:
- EP-A1- 0 265 682
- EP-A1- 1 120 298
- EP-A2- 0 213 367
- EP-A2- 0 916 525
- EP-A2- 1 400 380
- EP-B1- 0 760 750
- DE-A1-102008 043 330
- FR-A1- 2 484 926
- GB-A- 2 202 498

## Beschreibung

Die Erfindung betrifft einen Lenker zur Übertragung von Kräften mit mindestens einem Lenkerstab aus einem Faserverbundwerkstoff, wobei der mindestens eine Lenkerstab mindestens ein Festkörpergelenk bildet und wobei der Lenker ausschließlich Festkörpergelenke aufweist, die von dem mindestens einen Lenkerstab gebildet sind.

Lenker werden üblicherweise als mittelbare Verbindung zwischen einem Radträger und einem Fahrzeugkörper eines Kraftfahrzeugs eingesetzt. Solche Lenker können beispielsweise als Stablenker ausgeführt sein. Stablenker weisen an gegenüberliegenden Enden des Lenkerstabs angeordnete Kugelgelenke oder in ihrer Funktion vergleichbare Gummilager auf.

Zur Verbindung des Radträgers - der Teil einer Radaufhängung des Kraftfahrzeugs ist und der ein Radlager aufnimmt, an dem ein Fahrzeugrad drehbar gelagert angeordnet ist - mit dem Fahrzeugkörper können beispielsweise aber auch Lenker in Form von Dreieckslenkern eingesetzt werden. Ein Dreieckslenker weist an einem Ende des Lenkerstabs ein Drehgelenk auf und an dem gegenüberliegenden Ende des Lenkerstabs ein Kugelgelenk. Kinematisch kann ein solcher Dreieckslenker auch als Kombination zweier Stablenker aufgefasst werden, wobei jeweils ein Kugelgelenk der beiden Stablenker räumlich zusammenfällt.

Des Weiteren kann der Lenker als Trapezlenker ausgestaltet sein. Ein Trapezlenker weist an den gegenüberliegenden Enden des Lenkerstabs angeordnete Drehgelenke auf. Bei solchen Trapezlenkern können Drehachsen der Drehgelenke räumlich gegeneinander verschränkt angeordnet sein.

Im Allgemeinen dienen solche Lenker der Übertragung von Zug- und Druckkräften, wobei durch die an den Enden des Lenkerstabs angeordneten Gelenke eine nahezu momentenfreie Einleitung der Zug- und Druckkräfte ermöglicht wird. Die bei herkömmlichen Lenkern an den Lenkerstäben angeordneten Gelenke sind üblicherweise hohen Belastungen und häufigen Lastwechseln ausgesetzt. Darüber hinaus ändert sich eine Steifigkeit der häufig als Gelenk eingesetzten Gummielemente in Abhängigkeit der Temperatur, wodurch auch eine Lenkersteifigkeit beeinflusst wird.

Anstelle der herkömmlicherweise eingesetzten Gelenke können bei Verwendung eines Faserverbundwerkstoffs zur Herstellung des Lenkerstabs in Endbereichen des Lenkerstabs Biegegelenke aus dem Faserverbundwerkstoff ausgeformt sein. Diese Biegegelenke weisen eine besonders große Verformbarkeit auf. Solche Biegegelenke sind beispielsweise in Form von Filmgelenken bekannt, wie sie bei spritzgegossenen Bauteilen eingesetzt werden. Über diese Biegegelenke können hohe Zugkräfte übertragen werden. Allerdings können über die herkömmlichen Biegegelenke nur vergleichsweise geringe Druckkräfte übertragen werden, sobald eine Krafteinleitungsrichtung der Druckkraft nicht in axialer Richtung des Lenkerstabs ist.

Aus EP 1 400 380 A3 sind Lenker bekannt, die einen Lenkerstab beinhalten, der ein als Biegegelenk ausgebildetes Festkörpergelenk aufweist. In EP 0 760 750 B1 hat das in einer gelenkten Vorderradaufhängung verwendete Festkörpergelenk G drei rotatorische Freiheitsgrade.

Als Aufgabe der Erfindung wird es daher angesehen, Lenker mit einem Lenkerstab aus Faserverbundwerkstoff so weiterzuentwickeln, dass der Lenker mit einem geringem konstruktiven Aufwand herstellbar ist und ein geringes Eigengewicht aufweist.
Diese Aufgabe wird erfindungsgemäß dadurch gelöst, dass der Lenkerstab zwei Festkörpergelenke mit jeweils drei rotatorischen Freiheitsgraden bildet. Im Gegensatz zu herkömmlichen Lenkern werden durch die in den gegenüberliegenden Endbereichen des Lenkerstabs angeordneten Festkörpergelenke die auftretenden Dreh- und Schwenkbewegungen durch eine elastische Verformung des gesamten Lenkerstabs aus dem Faserverbundwerkstoff ausgeführt. Auf diese Weise kann mit Hilfe des erfindungsgemäßen Lenkers eine Kinematik eines herkömmlichen Stablenkers, an dessen Enden jeweils ein Kugelgelenk angeordnet ist, nachgebildet werden.
Dadurch können Druck- und Zugkräfte sowie Torsionsmomente besonders wirkungsvoll über den Lenker übertragen werden. Zudem kann auf den Einsatz beispielsweise besonders verschleißanfälliger Gummielemente als Gelenke an den gegenüberliegenden Enden des Lenkerstabs verzichtet werden. Der erfindungsgemäße Lenker kann besonders kostengünstig und einfach dadurch hergestellt werden, dass der Lenker einstückig hergestellt ist. Erfindungsgemäß kann der aus dem Lenkerstab bestehende Lenker einfach aus sogenannten Prepregs aus dem Faserverbundwerkstoff hergestellt werden.

Bei einer besonders vorteilhaften Ausgestaltung des erfindungsgemäßen Lenkers ist vorgesehen, dass der Lenker aus einem Glasfaserverbundwerkstoff hergestellt ist. Der Glasfaserverbundwerkstoff weist einen niedrigen Elastizitätsmodul auf und ermöglicht dadurch vergleichsweise große Verformungen des Lenkers bzw. Lenkerstabs. Des Weiteren weist der Glasfaserverbundwerkstoff eine besonders hohe Ermüdungsfestigkeit auf, so dass mit Hilfe des Glasfaserverbundwerkstoffs besonders haltbare Lenker bzw. Lenkerstäbe hergestellt werden können, die über eine Vielzahl von Lastwechseln nahezu verschleißfrei Zug- und Druckkräfte übertragen können.

Bei einer vorteilhaften Ausgestaltung des erfindungsgemäßen Lenkers ist vorgesehen, dass der Lenkerstab einen sich in axialer Richtung kontinuierlich verändernden Querschnittsflächenverlauf aufweist. Auf diese Weise kann die Geometrie beziehungsweise eine Kontur des Lenkerstabs besonders gut an die jeweiligen Belastungsvorgaben mit Hilfe geeigneter Optimierungsverfahren angepasst werden.

Vorteilhafterweise ist erfindungsgemäß vorgesehen, dass eine Lenkergeometrie an vorgegebene Belastungs- und Verformungsparameter angepasst ist. Zu diesem Zweck können geeignete Modellierungs- und Optimierungsverfahren eingesetzt werden.

Um trotz einer möglichst geringen Ausdehnung des Lenkers in Richtung des Lenkerstabs eine möglichst hohe Deformation zu ermöglichen ist vorgesehen, dass der Lenker mindestens zwei beabstandet und parallel zueinander ausgerichtete Lenkerstäbe aufweist, die jeweils zwei Festkörpergelenke mit jeweils drei rotatorischen Freiheitsgraden bilden und deren einander zugeordnete Enden starr miteinander verbunden sind. Jeder einzelne Lenkerstab kann dann eine vergleichsweise kleine Querschnittsfläche und ein entsprechend geringes Eigengewicht aufweisen. Durch die Verwendung von zwei oder mehreren in einer vorgesehenen Deformationsrichtung nebeneinander, bzw. parallel zueinander angeordneten Lenkerstäbe, die mit geringem Kraftaufwand in Deformationsrichtung deformiert werden können, können gleichzeitig verhältnismäßig große Zug- und Druckkräfte übertragen werden.

Bei mehreren dünnen Lenkerstäben besteht die Gefahr, dass die Lenkerstäbe bei einer übermäßig großen Krafteinwirkung von Druck- oder Torsionskräften knicken, wodurch sich die von dem Lenkerstab erzeugten Rückstellkräfte unkontrollierbar verändern und eine Fehlfunktion oder Beschädigung des Lenkers nicht mehr ausgeschlossen werden kann. Um ein Knicken der Lenkerstäbe zu verhindern, ist vorgesehen, dass die mindestens zwei Lenkerstäbe zusätzlich in einem mittleren Bereich beabstandet von den Enden miteinander verbunden sind.

Die Funktionen herkömmlicher Dreiecks- und Trapezlenker können durch den erfindungsgemäßen Lenker einfach dadurch nachgebildet werden, dass der Lenker mindestens zwei starr miteinander verbundene und in einem Winkel zueinander ausgerichtete Lenkerstäbe aus dem Faserverbundwerkstoff aufweist.

Vorteilhafterweise ist vorgesehen, dass der Lenker als Dreieckslenker ausgestaltet ist. Zu diesem Zweck können erfindungsgemäß zwei Lenkerstäbe, die jeweils mindestens ein Festkörpergelenk bilden, in jeweils einem Endbereich der Lenkerstäbe starr miteinander verbunden sein, während gegenüberliegende Endbereiche beabstandet zueinander beispielsweise mit dem Radträger einer Radaufhängung eines Kraftfahrzeugs verbunden sind. Die für die Nachbildung der Funktion eines Dreieckslenkers erforderliche Festlegung der kinematischen Freiheitsgrade des Lenkers beziehungsweise die Anpassung des Lenkers an die durch Dreieckslenker üblicherweise aufzunehmenden hohen Seitenkräfte erfolgt durch eine geeignete Anordnung der einzelnen Lenkerstäbe zueinander und eine entsprechende Optimierung der Lenkerstabgeometrien und einer Gesamtgeometrie des Lenkers.

Die Erfindung betrifft auch eine Lenkereinrichtung mit einem Lenker gemäß einer der voranstehend beschriebenen Ausführungsformen zur Übertragung von Kräften zwischen einem Karosserieteil und einem Radaufhängungsteil. Bei dem Karosserieteil handelt es sich um den Fahrzeugkörper eines Kraftfahrzeugs und bei dem Radaufhängungsteil kann es sich beispielsweise um den Radträger handeln.

Erfindungsgemäß ist die Lenkereinrichtung dadurch gekennzeichnet, dass der Lenker starr mit dem Karosserieteil und dem Radaufhängungsteil verbunden ist. Auf diese Weise kann eine Lenkereinrichtung bereitgestellt werden, bei der auf teure und verschleißanfällige Gelenke zur Verbindung eines Lenkerstabs mit dem Radaufhängungsteil und dem Karosserieteil verzichtet werden kann.

Verschiedene Ausgestaltungen von Lenkern werden anhand von in der Zeichnung dargestellten Ausführungsbeispielen näher erläutert.

Es zeigt:
Fig. 1a eine schematisch dargestellte Schnittansicht eines Lenkers mit einem einzigen Lenkerstab,
Fig. 1b eine schematisch dargestellte Verformungslinie längs derer sich der in Fig. 1a dargestellte Lenker unter Druckbelastung und Biegung verformt,
Fig. 2 eine schematische Schnittansicht eines Lenkers mit mehreren beabstandet zueinander angeordneten Lenkerstäben, die an deren jeweiligen Enden starr miteinander verbunden sind, und
Fig. 3 eine schematische Schnittansicht eines Lenkers gemäß Fig. 2, wobei jeweils benachbarte Lenkerstäbe in einem mittleren Bereich miteinander verbunden sind.

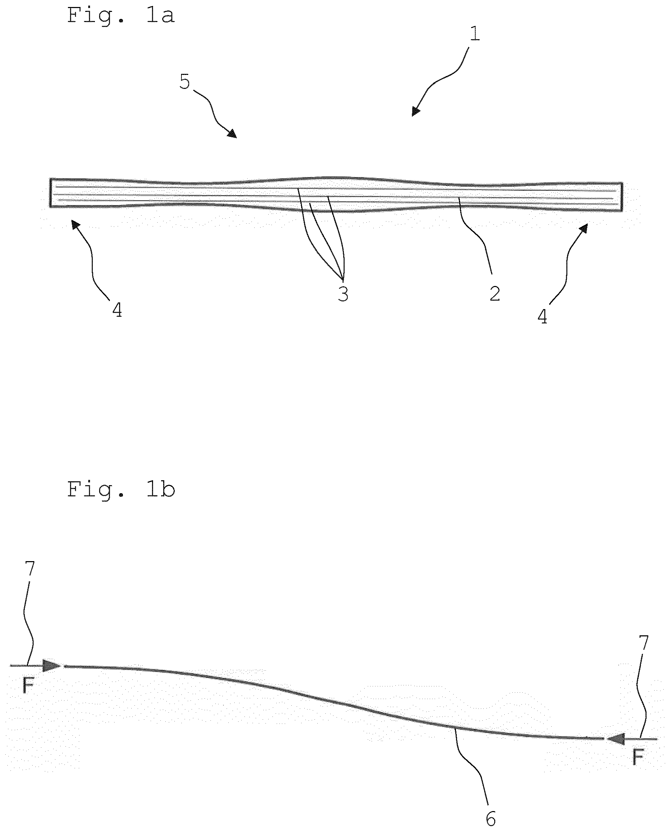

Fig. 1a zeigt eine schematische Darstellung eines Lenkers 1 aus einem Faserverbundwerkstoff, wobei der Lenker 1 aus einem Lenkerstab 2 besteht. Der Lenkerstab 2 weist einen sich in axialer Richtung des Lenkerstabs 2 kontinuierlich verändernden Querschnittsflächenverlauf auf. Dieser Querschnittsflächenverlauf ist mit Hilfe geeigneter Modellierungs- und Optimierungsverfahren in Anhängigkeit vorgegebener Belastungs- und Verformungsparameter für einen konkreten Anwendungsfall des dargestellten Lenkers 1 ermittelt worden. Eine Faserverlaufsrichtung der Fasern des zur Herstellung des Lenkers verwendeten Faserverbundwerkstoffs ist durch Faserverlaufslinien 3 schematisch dargestellt.

Der Lenkerstab 2 des Lenkers 1 weist einen zwischen gegenüberliegenden Endbereichen 4 des Lenkerstabs 2 angeordneten Verformungsbereich 5 auf, wobei der gesamte Verformungsbereich 5 ein Festkörpergelenk bildet.

In Fig. 1b ist schematisch eine Verformungslinie 6 dargestellt, entlang derer sich der in Fig. 1a abgebildete Lenker 1 unter einer durch die Pfeile 7 gekennzeichneten und auf den Lenkerstab 2 wirkenden Druckbelastung verformt.

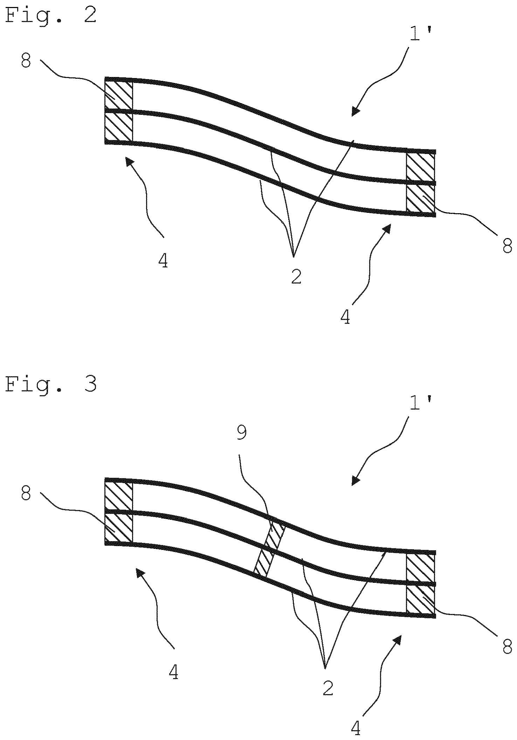

In Fig. 2 ist schematisch ein Lenker 1' dargestellt, der drei beabstandet und parallel zueinander ausgerichtete Lenkerstäbe 2 aufweist. Die einzelnen Lenkerstäbe 2 weisen jeweils eine Formgebung, bzw. einen Querschnittsflächenverlauf gemäß Fig. 1a auf und sind lediglich vereinfachend durch eine Linie dargestellt. Die drei Lenkerstäbe 2 sind an den einander zugeordneten Endbereichen 4 jeweils starr in einer Aufnahmeeinrichtung 8 miteinander verbunden, so dass bei einer Krafteinwirkung alle Lenkerstäbe 2 eine im Wesentlichen übereinstimmende Deformation erleiden. In Fig. 2 ist exemplarisch eine vorteilhafte s-förmige Deformation der Lenkerstäbe 2 dargestellt. Durch einen angemessenen Abstand zwischen benachbarten Lenkerstäben 2 kann vermieden werden, dass sich benachbarte Lenkerstäbe 2 bei einer Deformation berühren und aneinander reiben. Jeder einzelne Lenkerstab 2 des Lenkers 1' kann erheblich dünner als bei einem in der Fig. 1a dargestellten Lenker 1 ausgestaltet sein. Durch die parallele Anordnung der an den Endbereichen 4 starr miteinander verbundenen Lenkerstäbe 2 können trotzdem vergleichsweise hohe Zug- und Druckkräfte über den Lenker 1' übertragen werden. Ein derartiger Lenker 1' eignet sich auf Grund der geringeren Länge der einzelnen Lenkerstäbe 2 im Vergleich mit dem in Fig. 1a dargestellten Lenker 1 besonders bei beengten Raumverhältnissen.

Um bei großen Zug- und Druckkräften ein unkontrollierbares Knicken der einzelnen Lenkerstäbe 2 bei dem Lenker 1' vermeiden zu können ist vorgesehen, dass etwa mittig zwischen den Endbereichen 4 die benachbarten Lenkerstäbe 2 starr bzw. abstandswahrend über einen Abstandshalter 9 miteinander verbunden sind, wie es schematisch in Fig. 3 dargestellt ist. In einem mittleren Bereich wirken auf jeden einzelnen Lenkerstab 2 lediglich geringe bzw. keine Biegemomente, so dass eine momentenfreie Festlegung der benachbarten Lenkerstäbe 2 zueinander möglich ist. Ein Knicken einzelner Lenkerstäbe 2 kann durch den vorgegebenen Abstand zu benachbarten Lenkerstäben 2 und die dadurch bewirkte Kopplung der Lenkerstäbe 2 zu einem Lenkerstabpaket reduziert oder vollständig verhindert werden.

## Patentansprüche

1. Lenker (1, 1') zur Übertragung von Kräften mit mindestens einem Lenkerstab (2) aus einem Faserverbundwerkstoff, wobei der mindestens eine Lenkerstab (2) mindestens ein Festkörpergelenk bildet und wobei der Lenker (1) ausschließlich Festkörpergelenke aufweist, die von dem mindestens einen Lenkerstab (2) gebildet sind, **dadurch gekennzeichnet, dass** der mindestens eine Lenkerstab (2) zwei Festkörpergelenke mit jeweils drei rotatorischen Freiheitsgraden bildet.

2. Lenker (1, 1') gemäß einem der voranstehenden Ansprüche, **dadurch gekennzeichnet, dass** der Lenker (1) einstückig hergestellt ist.

3. Lenker (1, 1') gemäß einem der voranstehenden Ansprüche, **dadurch gekennzeichnet, dass** der Lenker (1) aus einem Glasfaserverbundwerkstoff hergestellt ist.

4. Lenker (1, 1') gemäß einem der voranstehenden Ansprüche, **dadurch gekennzeichnet, dass** der Lenkerstab (2) einen sich in axialer Richtung kontinuierlich verändernden Querschnittflächenverlauf ausweist.

5. Lenker (1, 1') gemäß einem der voranstehenden Ansprüche, **dadurch gekennzeichnet, dass** sich der Lenkerstab (2) bei einer Druckbelastung s-förmig verformt.

6. Lenker (1, 1') gemäß einem der voranstehenden Ansprüche, **dadurch gekennzeichnet, dass** eine Lenkergeometrie an vorgegebene Belastungs- und Verformungsparameter angepasst ist.

7. Lenker (1') gemäß einem der voranstehenden Ansprüche, **dadurch gekennzeichnet, dass** der Lenker (1') mindestens zwei beabstandet und parallel zueinander ausgerichtete Lenkerstäbe (2) aufweist, die jeweils zwei Festkörpergelenke mit jeweils drei rotatorischen Freiheitsgraden bilden und deren einander zugeordnete Enden (4) starr miteinander verbunden sind.

8. Lenker (1') gemäß Anspruch 7, **dadurch gekennzeichnet, dass** die mindestens zwei Lenkerstäbe (2) zusätzlich in einem mittleren Bereich beabstandet von den Enden (4) miteinander verbunden sind.

9. Lenker (1, 1') gemäß einem der voranstehenden Ansprüche, **dadurch gekennzeichnet, dass** der Lenker (1, 1') mindestens zwei starr miteinander verbundene und in einem Winkel zueinander ausgerichtete Lenkerstäbe (2) aus dem Faserverbundwerkstoff aufweist, die jeweils zwei Festkörpergelenke mit jeweils drei rotatorischen Freiheitsgraden bilden.

10. Lenker (1, 1') gemäß Anspruch 9, **dadurch gekennzeichnet, dass** der Lenker (1, 1') als Dreieckslenker oder als Trapezlenker ausgestaltet ist.

11. Lenkereinrichtung mit einem Lenker (1, 1') gemäß einem der voranstehenden Ansprüche zur Übertragung von Kräften zwischen einem Karosserieteil und einem Radaufhängungsteil, **dadurch gekennzeichnet, dass** der Lenker (1, 1') starr mit dem Karosserieteil und dem Radaufhängungsteil verbunden ist.

## Claims

1. Rod (1, 1') for the transmission of forces, comprising at least one steering rod (2) made of a fiber composite material, wherein the at least one steering rod (2) forms at least one solid joint and wherein the rod (1) comprises exclusively solid joints that are formed by the at least one steering rod (2), **characterized in that** the at least one steering rod (2) forms two solid joints each having three rotational degrees of freedom.

2. Rod (1, 1') according to the preceding claim, **characterized in that** the rod (1) is formed in one piece.

3. Rod (1, 1') according to any of the preceding claims, **characterized in that** the rod (1) is produced from a glass-fiber composite material.

4. Rod (1, 1') according to any of the preceding claim, **characterized in that** the steering rod (2) has a cross-sectional area progression that changes continuously in the axial direction.

5. Rod (1, 1') according to any of the preceding claims, **characterized in that** the steering rod (2) deforms in an S-shape under a compressive load.

6. Rod (1, 1') according to any of the preceding claims, **characterized in that** a rod geometry is adapted to specified loading and deformation parameters.

7. Rod (1') according to any of the preceding claims, **characterized in that** the rod (1') comprises at least two steering rods (2) which are spaced apart and oriented in parallel from/to one another and which each form two solid joints each having three rotational degrees of freedom, and the mutually-assigned ends(4) of which are rigidly connected to one another.

8. Rod (1') according to claim 7, **characterized in that** the at least two steering rods (2) are in addition connected to one another in a central region that is spaced apart from the ends (4).

9. Rod (1, 1') according to any of the preceding claims, **characterized in that** the rod (1, 1') comprises at least two steering rods (2) made of the fiber composite material and rigidly connected to one another and oriented so as to be at an angle to one another, which steering rods each form two solid joints each having three rotational degrees of freedom.

10. Rod (1, 1') according to claim 9, **characterized in that** the rod (1, 1') is formed as an A-link or as a trapezoidal link.

11. Rod device comprising a rod (1, 1') according to any of the preceding claims for the transmission of forces between a body panel and a wheel suspension part, **characterized in that** the rod (1, 1') is rigidly connected to the body panel and to the wheel suspension part.

## Revendications

1. Bielle (1, 1') destiné à la transmission de forces avec au moins une barre de guidage (2) composée d'un matériau composite à fibres, dans laquelle l'au moins une barre de guidage (2) forme au moins une articulation de corps solide et dans laquelle la bielle (1) présente exclusivement des articulations de corps solide, qui sont formées par l'au moins une barre de guidage (2), **caractérisée en ce que** l'au moins une barre de guidage (2) forme deux articulations de corps solide avec respectivement trois degrés de liberté de rotation.

2. Bielle (1, 1') selon la revendication précédente, **caractérisée en ce que** la bielle (1) est fabriquée d'un seul tenant.

3. Bielle (1, 1') selon l'une quelconque des revendications précédentes, **caractérisée en ce que** la bielle (1) est fabriquée à partir d'un matériau composite à fibres de verre.

4. Bielle (1, 1') selon l'une quelconque des revendications précédentes, **caractérisée en ce que** la barre de guidage (2) présente un profil de surface de section transversale se modifiant en continu dans la direction axiale.

5. Bielle (1, 1') selon l'une quelconque des revendications précédentes, **caractérisée en ce que** la barre de guidage (2) se déforme de manière à présenter une forme en S sous une charge de pression.

6. Bielle (1, 1') selon l'une quelconque des revendications précédentes, **caractérisée en ce qu'**une géométrie de bielle est adaptée à des paramètres de charge et de déformation spécifiés.

7. Bielle (1') selon l'une quelconque des revendications précédentes, **caractérisée en ce que** la bielle (1') présente au moins deux barres de guidage (2) écartées et orientées de manière parallèle l'une par rapport à l'autre, qui forment respectivement deux articulations de corps solide avec respectivement trois degrés de liberté de rotation et dont les extrémités (4) associées les unes aux autres sont reliées entre elles de manière rigide.

8. Bielle (1') selon la revendication 7, **caractérisée en ce que** les au moins deux barres de guidage (2) sont en outre reliées l'une à l'autre dans une zone centrale écartée des extrémités (4).

9. Bielle (1, 1') selon l'une quelconque des revendications précédentes, **caractérisée en ce que** la bielle (1, 1') présente au moins deux barres de guidage (2) reliées l'une à l'autre de manière rigide et orientées l'une par rapport à l'autre selon un angle, composées d'un matériau composite à fibres, qui forment respectivement deux articulations de corps solide avec respectivement trois degrés de liberté de rotation.

10. Bielle (1, 1') selon la revendication 9, **caractérisée en ce que** la bielle (1, 1') est configurée sous la forme d'une bielle triangulaire ou d'une bielle trapézoïdale.

11. Dispositif à bielle avec une bielle (1, 1') selon l'une quelconque des revendications précédentes destiné à la transmission de forces entre une pièce de carrosserie et une pièce de suspension de roue, **caractérisé en ce que** la bielle (1, 1') est reliée de manière rigide à la pièce de carrosserie et à la pièce de suspension de roue.
